**Europäisches Patentamt**

(19) **European Patent Office**

**Office européen des brevets**

(11) Numéro de publication: **0 252 812**
**B1**

## (12) FASCICULE DE BREVET EUROPEEN

(45) Date de publication du fascicule du brevet: **30.01.91**

(21) Numéro de dépôt: **87401531.6**

(22) Date de dépôt: **01.07.87**

(51) Int. Cl.⁵: **G 07 F 7/10**, G 07 B 13/02

(54) Dispositif de sécurité interdisant le fonctionnement d'un ensemble électronique après une première coupure de son alimentation électrique.

(30) Priorité: **11.07.86 FR 8610208**

(43) Date de publication de la demande:
**13.01.88 Bulletin 88/02**

(45) Mention de la délivrance du brevet:
**30.01.91 Bulletin 91/05**

(84) Etats contractants désignés:
**AT BE CH DE ES FR GB IT LI LU NL SE**

(56) Documents cités:
**EP-A-0 027 425**
**EP-A-0 070 199**
**WO-A-85/04035**
**DE-A-2 738 113**

(73) Titulaire: **BULL CP8**
**Rue Eugène Hénaff BP 45**
**F-78190 Trappes (FR)**

(72) Inventeur: **Ugon, Michel**
**6, rue des Cepages**
**F-78310 Maurepas (FR)**

(74) Mandataire: **Debay, Yves et al**
**BULL S.A. Industrial Property Department P.C.:**
**HQ 8M006 B.P. 193.16, 121 avenue de Malakoff**
**F-75764 Paris Cédex 16 (FR)**

Courier Press, Leamington Spa, England.

## Description

La présente invention concerne un dispositif de sécurité interdisant l'exécution d'au moins une fonction d'un ensemble électronique aprés une premiére coupure de son alimentation électrique.

Ce dispositif s'applique plus particulièrement à des ensembles électroniques intégrés à semiconducteurs, comportant des composants volatils pour le stockage de données ou de programmes, ou pour le traitement des signaux ou des informations, tels que par exemple des cartes de crédit à microprocesseurs intégrés. Ces ensembles peuvent aussi être constitués au moins partiellement par des compteurs numériques ou comporter des horloges à quartz.

Les ensembles électroniques qui comportent des mémoires volatiles (Mémoires RAM par exemple), ont pour inconvénient de perdre toutes les informations contenues dans ces mémoires, en l'absence de source d'alimentation électrique. C'est le cas par exemple des cartes de crédit de type électronique qui comportent un microprocesseur intégré associé notamment à des mémoires de ce type.

On rencontre le même inconvénient dans des ensembles électroniques plus conventionnels tels que les compteurs mentionnés plus haut qui, en dehors du dispositif d'affichage numérique, sont constitués sous forme de circuits intégrés dont les principaux composants sont des bascules. L'état d'origine de ces composants à la mise sous tension est toujours le même grâce à la remise à zéro qui est effectuée lorsque de tels compteurs sont remis sous tension.

Dans un ensemble électronique intégré, tel qu'une carte de crédit à microprocesseur et à mémoire volatile, il peut être nécessaire, pour des raisons de sécurité, notamment lorsque la pile ou la batterie qui alimente l'ensemble est contenue dans la carte, d'interdire toute remise en fonctionnement de la carte, lorsque la pile ou la batterie qui alimente l'ensemble électronique intégré contenu dans cette carte a été retirée (effectuant ainsi une coupure de l'alimentation électrique), puis remise en place, de manière à remettre sous tension cet ensemble électronique intégré. En effet, lorsque la carte est utilisée par exemple pour effectuer un retrait de billets à partir d'un terminal bancaire distributeur, il est nécessaire pour que ce retrait soit autorisé par le système de traitement relié à ce terminal, que le détenteur de la carte fasse connaître tout d'abord son code d'accès personnel. Généralement, la carte contient un compteur intégré qui mémorise le nombre de tentatives effectuées par le détenteur de la carte, pour indiquer au terminal, son code personnel d'accès. Le nombre de tentatives d'introduction de code d'accès est limité de façon prédéterminée, de sorte qu'après un nombre prédéterminé de tentatives infructueuses, la carte est retenue par le terminal puisque le compteur a atteint le nombre prédéterminé à ne pas dépasser. Le détenteur ainsi frusté de la carte doit intervenir auprès de la banque pour la récupérer.

Dans le cas où le détenteur de la carte est un fraudeur qui, par exemple, ne connaissant pas le code d'accès exact, souhaiterait effectuer un grand nombre de tentatives successives pour retrouver le code d'accès, sans que le compteur ne joue son rôle sécuritaire, il lui serait possible de retirer ou déconnecter la batterie ou la pile d'alimentation de l'ensemble électronique de la carte pour que la coupure d'alimentation provoque une remise à zéro automatique du compteur. Cette remise à zéro étant effectuée, il suffit au fraudeur de replacer la pile pour alimenter à nouveau l'ensemble électronique de la carte et pour accéder cette fois avec succès aux mémoires internes, puisque le code d'accès aura été remis dans l'ètat initial connu; la pile peut être à nouveau retirée avant que le nombre prédéterminé de tentatives fixé à ne pas dépasser et qui est enregistré par le compteur, ne soit atteint, et ainsi de suite.

On voit qu'il est important dans ce cas de prévoir un dispositif de sécurité interdisant l'exécution d'une ou plusieurs fonctions, ou même le fonctionnement total de l'ensemble électronique porté par la carte, après toute première coupure de l'alimentation de cet ensemble électronique.

Un autre exemple où le rôle d'un tel dispositif de sécurité peut être important, est par exemple celui d'un compteur électronique intégré qui enregistre les distances parcourues par un véhicule. Un fraudeur peut être tenté, si l'alimentation de ce compteur est autonome etintegrée au compteur, de couper cette alimentation pour provoquer ainsi une remise à zéro du compteur. La remise sous tension du compteur permet ensuite à ce fraudeur de repartir sur des indications de distances parcourues beaucoup plus avantageuses, notamment lorsqu'il souhaite revendre son véhicule.

Un autre exemple d'ensemble électronique pour lequel il est souhaitable de faire intervenir un dispositif de sécurité interdisant le fonctionnement d'un ensemble électronique est celui d'un ensemble comportant une horloge à quartz dont le fonctionnement n'est plus assuré, dès que la source électrique d'alimentation interne devient défaillante, En effet, dans ce cas, la base de temps fixée par l'horloge à quartz se dérègle à l'insu de l'utilisateur de l'ensemble électronique et ceci peut avoir des conséquences très importantes s'il s'agit par exemple, d'un ensemble électronique fournissant des mesures étalons. Il est utile dans ce cas, d'interdire le fonctionnement de l'ensemble si l'alimentation de l'horloge a été coupée puis remise en place afin que l'utilisateur soit prévenu d'une telle coupure et qu'il procéde à un réétalonnage.

On ne connaît pas actuellement de dispositifs de sécurité fiable de structure simple, peu coûteux, et qui permettent d'interdire le fonctionement d'une ou plusieurs fonctions d'un ensemble électronique, ou même le fonctionnement de cet ensemble, après une première coupure de son alimentation, puis une remise sous tension de cet ensemble.

On connaît seulement des dispositifs incorporés dans des ensembles électroniques, qui permettent tout au plus d'interdire de façon momentanée certaines fonctions de l'ensemble électronique dans lequel ils se trouvent, lorsque le niveau de la tension d'alimentation de l'ensemble est inférieur à un certain seuil prédéterminé. Cependant, lorsque le niveau redevient supérieur au seuil, l'ensemble électronique peut à nouveau fonctionner. C'est par exemple le cas avec le dispositif décrit dans le document WO-A-8504035.

L'invention a pour but de réaliser un dispositif de sécurité interdisant l'exécution d'au moins une fonction d'un ensemble électronique, après une première coupure de son alimentation électrique, puis une remise sous tension d'alimentation, ce dispositif étant fiable, de structure simple, peu coûteux et présentant un trés haut degré de sécurité.

L'invention a pour objet un dispositif de sécurité interdisant l'exécution d'au moins une fonction d'un ensemble électronique après une première coupure de son alimentation électrique puis une remise sous tension d'alimentation, caractérise en ce qu'il comporte:

un premier moyen ne fonctionnant qu'une seule fois au cours d'une durée débutant à l'instant d'une premiére mise sous tension par l'alimentation, et finissant avant l'instant d'une première coupure de cette alimentation, ce premier moyen fournissant sur une sortie au cours de cette durée, un signal caractéristique du fonctionnement de ce premier moyen;

un deuxiéme moyen dont une entrée est reliée à la sortie du premier moyen pour mémoriser le signal caractéristique depuis l'instant de la première mise sous tension jusqu'à l'instant d'une premiére coupure, ce deuxiéme moyen étant relié par une sortie à l'ensemble électronique fournissant sur cette sortie, un signal d'inhibition ayant un premier niveau autorisant le fonctionnement dudit ensemble, depuis l'instant de la première mise sous tension, jusqu'à l'instant de la première coupure, ce signal d'inhibition ayant un deuxiéme niveau interdisant l'exécution de ladite fonction à partir de l'instant de la première coupure, ce signal d'inhibition conservant ce deuxième niveau même en cas de remise sous tension.

Selon une autre caractéristique, le premier moyen est un circuit à composants statiques, l'un de ces composants étant détruit à la fin de ladite durée par des moyens internes ou externes à ce circuit.

Selon une autre caractéristique, le deuxième moyen comporte un circuit de mémorisation dudit signal caractéristique, relié au premier moyen et un circuit d'inhibition relié circuit de mémorisation et au premier moyen et fournissant ledit signal d'inhibition sur une sortie.

Selon une autre caractéristique, le dispositif comprend en outre un moyen de déverrouillage de l'interdiction d'exécution de ladite fonction, ce moyen de déverrouillage ayant une sortie reliée à l'entrée du deuxième moyen, ce moyen de déverrouillage fournissant un signal de sortie présentant ledit premier niveau lorsqu'après une remise sous tension de l'appareil après une coupure il est souhaitable de permettre l'exécution de ladite fonction, ce moyen de déverrouillage comprenant au moins une entrée pour recevoir un signal codé, à la réception duquel le signal de sortie de ce moyen de déverrouillage présente ledit premier niveau.

Selon une autre caractéristique, le circuit de mémorisation est une bascule de type maître-esclave.

Selon une autre caractéristique, le circuit de mémorisation comprend une ou plusieurs mémoires volatiles.

Selon une autre caractéristique, le composant détruit à la fin de ladite durée est un composant détruit par un rayonnement laser.

Selon une autre caractéristique, le composant détruit à la fin de ladite durée est un composant détruit par une sur intensité du courant qui le traverse.

Selon une autre caractéristique, le composant détruit à la fin de ladite durée est un composant détruit par action mécanique.

Selon une autre caractéristique, l'alimentation de l'appareil et du dispositif est une pile ou une batterie.

Selon une autre caractéristique, l'appareil est une carte à microcircuits, l'un de ces microcircuits étant constitué par une ou plusieurs mémoires volatiles.

Selon une autre caractéristique, au moins l'une des mémoires volatiles de l'appareil constitue le circuit de mémorisation du deuxième moyen.

Enfin, selon une autre caractéristique, la pile ou la batterie est portée par la carte.

Les caractéristiques et avantages de l'invention ressortiront mieux de la description qui va suivre, donnée en référence aux dessins annexés dans lesquels:

la figure 1 représente schématiquement un dispositif de sécurité conforme à l'invention,

la figure 2 est un organigramme des signaux essentiels intervenant dans le fonctionnement de ce dispositif de sécurité.

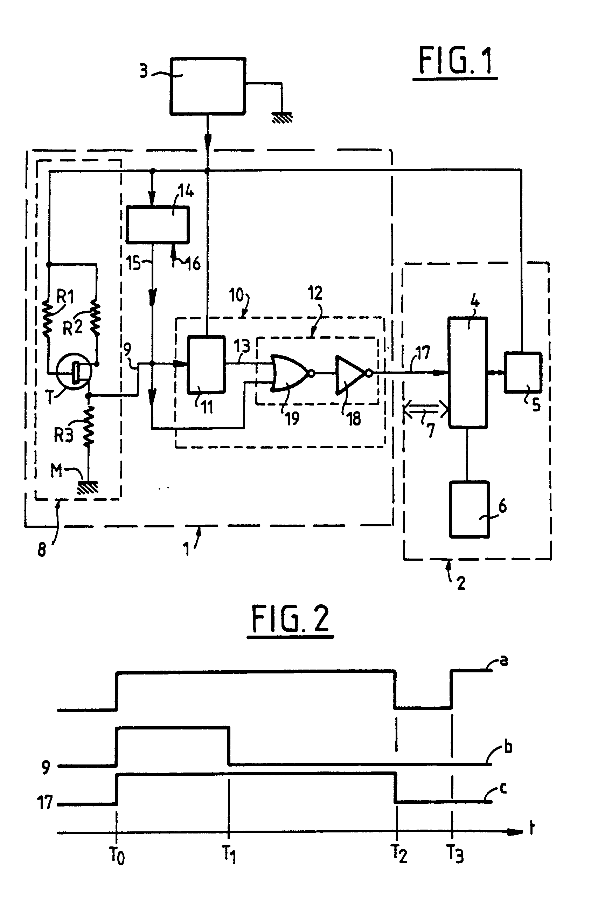

Le dispositif de sécurité 1 représenté schématiquement sur la figure 1, permet d'interdire l'exécution d'au moins une fonction d'un ensemble électronique 2, après une première coupure de son alimentation électrique 3, puis une remise sous tension d'alimentation. L'ensemble électronique 2 représenté en exemple sur cette figure peut être par exemple un microprocesseur intégré 4, associé à une mémoire vive 5 (mémoire RAM), ainsi qu'à une mémoire morte 6. Dans cet exemple d'application du dispositif de sécurité, on suppose que l'ensemble électronique 2 est par exemple une carte de crédit, et que l'ensemble électronique 2 ainsi que le dispositif de sécurité 1, sont intégrés et contenus dans la carte. On suppose aussi que l'alimentation électrique 3 qui peut être une pile ou une batterie, est elle aussi contenue dans la carte ou portée par celle-ci.

Il est bien évident que l'ensemble électronique 2 peut être un ensemble très différent tel qu'un compteur de distance, un appareil de mesures commandé par une horloge, .... etc. Dans le cas où l'ensemble électronique 2 est une carte de crédit par exemple, on a représenté en 7 le bus d'entrée-sortie qui permet au microprocesseur 4 de cette carte, de communiquer avec un terminal bancaire.

Le dispositif de sécurité 1 comprend un premier moyen 8 ne fonctionnant qu'une seule fois au cours d'une durée débutant à l'instant d'une première mise sous tension par l'alimentation 3, et finissant avant l'instant d'une première coupure de cette alimentation. Ce premier moyen fournit sur une sortie 9, au cours de cette durée, comme on le verra plus loin en détail, un signal caractéristique de son fonctionnement.

Le dispositif 1 comprend aussi un deuxième moyen 10 relié à la sortie du premier moyen 8, pour mémoriser le signal caractéristique fourni par ce premier moyen, depuis l'instant de la première mise sous tension d'alimentation 3, jusqu'à l'instant d'une première coupure. Ce deuxième moyen fournit sur une sortie 17, comme on le verra plus loin en détail, un signal d'inhibition ayant un premier niveau depuis l'instant de la première mise sous tension jusqu'à l'instant de la première coupure. Ce signal d'inhibition présente un deuxième niveau à partir de l'instant de la première coupure et conserve ce deuxième niveau, même en cas de remise sous tension de l'ensemble électronique et du dispositif de sécurité 1, par l'alimentation 3. Le signal d'inhibition, lorsqu'il est au premier niveau, autorise le fonctionnement de l'ensemble électronique, ce signal interdit l'exécution d'au moins une fonction de cet ensemble, lorsqu'il est au deuxième niveau.

Dans un autre mode de réalisation du dispositif celui-ci comprend en outre un moyen 14 de déverrouillage de l'interdiction d'exécution d'au moins une fonction de l'ensemble électronique 2 lorsque le signal d'inhibition est au deuxième niveau. Ce moyen de déverrouillage a une sortie 15 qui est reliée à l'entrée du deuxième moyen 10. Il fournit, comme on le verra plus loin en détail, un signal de sortie présentant un premier niveau, lorsqu'après une remise sous tension de l'appareil, faisant suite à une coupure, il est souhaitable de lever l'interdiction d'exécution de la fonction considérée. Ce moyen de déverrouillage comporte au moins une entrée 16 qui permet de recevoir un signal codé, à la réception duquel le signal de sortie de ce moyen de déverrouillage présente le niveau du signal caractéristique avant une première coupure, ce qui permet ainsi à l'ensemble électronique de fonctionner à nouveau, sans inhibition d'une ou plusieurs de ses fonctions. Le moyen 14 peut être constitué par le microprocesseur 4 lui-même recevant le signal codé par l'intermédiaire du circuit d'interface 7. Dans ce cas, le microprocesseur 4 peut posséder une sortie spécifique reliée directement à la sortie 15. Le premier moyen 8 peut être constitué par un circuit de commutation utilisant un transistor T de type MOS, dont la grille et le drain sont par exemple reliés respectivement à la sortie de la source d'alimentation 3, par des résistances $R_1$, $R_2$; la source du transistor T est reliée à une masse de référence M, par une résistance R3 et constitue la sortie 9 du premier moyen 8.

Le deuxième moyen 10 comprend un circuit de mémorisation 11, constitué par exemple par une bascule de type RS, commandée par le signal de sortie du premier moyen et reliée à l'alimentation 3. Ce signal est mémorisé par le circuit de mémorisation. Dans le cas où l'ensemble électronique dont on veut inhiber l'exécution d'au moins l'une des fonctions, ou la totalité du fonctionnement après une première coupure de l'alimentation 3, est un microprocesseur associé à des mémoires, le circuit de mémorisation 11 peut être éventuellement constitué par une ou plusieurs cellules de la mémoire 5 du microprocesseur 4 (mémoire RAM).

Le deuxième moyen comprend aussi un circuit d'inhibition 12, relié au circuit de mémorisation 11 et à la sortie 9 du premier moyen 8. Ce circuit d'inhibition comporte une porte NOR 19 dont les entrées sont reliées respectivement à la sortie 9 du premier moyen et à la sortie 13 du circuit de mémorisation 11. La sortie de cette porte est reliée à un inverseur 18 dont la sortie constitue la sortie 17 de ce circuit d'inhibition et la sortie du deuxième moyen 10. Cette sortie fournit le signal d'inhibition mentionné plus haut. Ce signal peut interdire l'exécution d'au moins une fonction de l'ensemble électronique, mais il peut aussi interdire tout fonctionnement de cet ensemble, par exemple en agissant sur un dispositif de commutation qui coupe l'alimentation de tout l'ensemble, même si après une coupure, cette alimentation a été remise en place.

Le fonctionnement du dispositif va maintenant être décrit de manière plus détaillée en référence à la figure 2.

Cette figure représente en (a) les variations de niveau de la tension de sortie de la source d'alimentation 3, au cours du temps t, en (b) le signal apparaissant sur la sortie 9 du premier moyen, en (c) le signal sur la sortie 17 du deuxième moyen 10, ou sur la sortie 13 du circuit de mémorisation 11.

La première mise sous tension du dispositif 1 et de l'ensemble électronique 2 par l'alimentation 3, apparaît sur le diagramme (a) à l'instant $T_0$. Cette mise sous tension finit à l'instant $T_2$ d'une première coupure. Cette première coupure peut être provoquée par exemple, dans le cas d'une carte de crédit à microprocesseur, par l'enlèvement de la pile ou de la batterie 3.

Le premier moyen 8 ne fonctionne que pendant une durée qui débute, comme le montre le diagramme (b), à l'instant $T_0$ de la première mise sous tension par l'alimentation 3, et finit à un instant $T_1$ avant l'instant $T_2$ d'une première coupure de l'alimentation. Le premier moyen 8 fournit sur sa sortie 9, au cours de cette durée $T_1$-$T_0$, un signal caractéristique de fonctionnement de ce premier moyen, tel que cela apparait sur le diagramme (b). En fait, le signal sur la sortie 9 du premier moyen 8 est à un premier niveau (niveau logique 1 par exemple) pendant la durée $T_1$-$T_0$, tandis que ce signal est à un deuxième niveau (niveau logique 0) en dehors de la durée $T_1$-$T_0$.

Le premier moyen 8, comme indiqué plus haut, est un circuit de commutation qui ne comporte que des composants statiques. Pour faire cesser le fonctionnement de ce circuit à l'instant $T_1$, l'un des composants de ce circuit peut être détruit à cet instant. Cette destruction peut être interne ou externe au circuit du premier moyen. La destruction externe peut être effectuée par exemple, en soumettant la résistance $R_2$ à un rayonnement laser, ou en soumettant cette résistance à une action mécanique qui la détruit (coupure par exemple) avant que la carte ne soit délivrée à son porteur final. La destruction par des moyens internes au circuit peut être provoquée par exemple par une surintensité provoquant une dissipation thermique, entraînant la rupture de la liaison entre le drain du transistor T et la résistance $R_2$. Ce qui dans l'un et l'autre cas relie définitivement la sortie 9 à la masse du circuit.

A l'instant $T_0$, le deuxième moyen 10 et notamment le circuit de mémorisation 11, mémorise le signal caractéristique fourni par le premier moyen, jusqu'à l'instant $T_2$ d'une première coupure. Ce deuxième moyen fournit sur sa sortie 17, entre l'instant $T_0$ de la première mise sous tension et l'instant $T_2$ de la première coupure, un signal d'inhibition tel que représenté sur le diagramme (c). Ce signal présente un premier niveau (niveau logique 1) entre les instants $T_0$ et $T_2$, tandis qu'il présente un deuxième niveau (niveau logique 0), à partir de l'instant $T_2$ de la première coupure. A partir de l'instant $T_2$ correspondant à une première coupure, par exemple parce que la batterie ou la pile 3 a été retirée, le signal de sortie du deuxième moyen 10 conserve son deuxième niveau (niveau logique 0), même si à l'instant $T_3$ (diagramme (a)), la pile ou la batterie 3 est remise en place, provoquant ainsi une remise sous tension du dispositif 1 et de l'ensemble électronique 2.

Le circuit d'inhibition 12 qui comporte une porte NOR suivie d'un inverseur fournit sur sa sortie 17 un signal tel que représenté sur le diagramme (c). Ce signal est au premier niveau (niveau logique 1) entre l'instant $T_0$ de la première mise sous tension, et l'instant $T_2$ de la première coupure. Ce signal reste au deuxième niveau (niveau logique 0) même si à l'instant $T_3$ la pile ou la batterie 3 qui alimente le dispositif et l'ensemble électronique 2, est remise en place. Il en résulte qu'entre les instants $T_0$ et $T_2$ le circuit d'inhibition 12 qui est relié à l'ensemble électronique, fournit un signal qui autorise le fonctionnement de l'ensemble électronique 2. A partir de l'instant $T_2$, le circuit d'inhibition fournit un signal de commande qui est au deuxième niveau, interdisant l'exécution d'au moins l'une des fonctions de cet ensemble ou de la totalité de ses fonctions. Cette interdiction demeure même si après cette première coupure la batterie ou la pile 3 est remise en place à l'instant $T_3$.

Le signal fourni par le circuit d'inhibition 12 est le même que celui qui est fourni par le circuit de mémorisation 11. Le circuit d'inhibition 12 est en fait un circuit d'interface entre le dispositif de sécurité et l'ensemble électronique.

Dans le cas d'une carte de crédit à microprocesseur, le signal d'inhibition de niveau logique 0, fourni par le circuit d'inhibition 12 après toute coupure de l'alimentation 3, peut interdire par exemple tout fonctionnement de l'ensemble 2 ou simplement certaines fonctions essentielles de cet ensemble qui font qu'il devient inutilisable par un fraudeur.

Dans le cas d'un compteur de distance sur un véhicule, le dispositif de sécurité interdit par exemple le redémarrage de ce compteur si la pile ou la batterie qui l'alimente 3 a été retirée ou déconnectée. Il est ainsi possible de constater qu'une fraude a été commise.

Dans le cas d'un ensemble électronique fonctionnant à partir d'impulsions d'horloge, le dispositif permet d'interdire le redémarrage de l'horloge lorsque l'alimentation de celle-ci a été retirée ou déconnectée.

Dans l'autre mode de réalisation le moyen de déverrouillage 14 de l'interdiction d'exécution d'une ou plusieurs fonctions de l'ensemble électronique 2 est relié à l'entrée du deuxième moyen 10 de mémorisation et à l'alimentation 3. Ce moyen de déverrouillage fournit sur une sortie 15, un signal de déverrouillage qui peut être appliqué après une première coupure puis une remise sous tension du dispositif et de l'ensemble électronique à l'entrée du deuxième moyen de mémorisation l0. Ce signal de déverrouillage est équivalent au signal caractéristique fourni par le premier moyen 8. Ce signal de déverrouillage doit bien entendu résulter de l'application sur l'entrée 16 du moyen de déverrouillage, d'un signal codé qui provoque l'apparition sur la sortie 15, du signal de déverrouillage présentant le premier niveau (niveau logique 1). Le signal codé peut être appliqué par des moyens appropriés, par un opérateur non fraudeur, qui souhaite remettre en fonctionnement l'ensemble électronique 2, après qu'une ou plusieurs des fonctions de cet ensemble aient été inhibées par le dispositif à la suite d'une coupure de l'alimentation 3.

**Revendications**

1. Dispositif de sécurité (1) interdisant l'exécution d'au moins une fonction d'un ensemble électronique (2) après une première coupure de son alimentation électrique même en cas de remise sous tension d'alimentation, caractérisé en ce qu'il comporte:

un premier moyen (8) ne fonctionnant qu'une seule fois au cours d'une durée débutant à l'instant ($T_0$) d'une première mise sous tension par l'alimentation (3), et finissant avant l'instant ($T_2$) d'une première coupure de cette alimentation, ce premier moyen fournissant sur une sortie (9) au cours de cette durée un signal caractéristique du fonctionnement de ce premier moyen;

un deuxième moyen (10) dont une entrée est reliée à la sortie du premier moyen (8) pour mémoriser le signal caractéristique depuis l'instant (T$_0$) de la première mise sous tension jusqu'à l'instant (T$_2$) d'une première coupure, ce deuxième moyen (10) étant relié par une sortie (17) à l'ensemble électronique (2) et fournissant sur cette sortie, un signal d'inhibition ayant un premier niveau autorisant le fonctionnement dudit ensemble, depuis l'instant (T$_0$) de la première mise sous tension, jusqu'à l'instant (T$_2$) de la première coupure, ce signal d'inhibition ayant un deuxième niveau interdisant l'exécution de ladite fonction à partir de l'instant (T$_2$) de la première coupure, ce signal d'inhibition conservant ce deuxième niveau même en cas de remise sous tension.

2. Dispositif selon la revendication 1, caractérisé en ce que le premier moyen (8) est un circuit à composants statiques, l'un de ces composants étant détruit à la fin de ladite durée, par des moyens internes ou externes à ce circuit.

3. Dispositif selon la revendication 1, caractérisé en ce que le deuxième moyen (10) comporte un circuit de mémorisation (11) dudit signal caractéristique, relié au premier moyen (8) et un circuit d'inhibition (12) relié au circuit de mémorisation (11) et au premier moyen (8) et fournissant ledit signal d'inhibition sur une sortie (17).

4. Dispositif selon la revendication 2, caractérisé en ce qu'il comprend en outre un moyen (14) de déverrouillage de l'interdiction d'exécution de ladite fonction, ce moyen de déverrouillage ayant une sortie (15) reliée à l'entrée du deuxième moyen (10), ce moyen de déverrouillage fournissant un signal de sortie présentant ledit premier niveau lorsqu'après une remise sous tension de l'appareil après une coupure il est souhaitable de permettre l'exécution de ladite fonction, ce moyen de déverrouillage comprenant au moins une entrée (16) pour recevoir un signal codé, à la réception duquel le signal de sortie de ce moyen de déverrouillage présente ledit premier niveau.

5. Dispositif selon la revendication 3, caractérisé en ce que le circuit de mémorisation (11) est une bascule de type maître-esclave.

6. Dispositif selon la revendication 3, caractérisé en ce que le circuit de mémorisation (11) comprend une ou plusieurs mémoires volatiles.

7. Dispositif selon la revendication 2, caractérisé en ce que le composant détruit à la fin de ladite durée est un composant détruit par un rayonnement laser.

8. Dispositif selon la revendication 2, caractérisé en ce que le composant détruit à la fin de ladite durée est un composant détruit par une surintensité du courant qui le traverse.

9. Dispositif selon la revendication 2, caractérisé en ce que le composant détruit à la fin de ladite durée est un composant détruit par action mécanique.

10. Dispositif selon la revendication 1, caractérisé en ce que l'alimentation (3) de l'appareil (2) et du dispositif est une pile ou une batterie.

11. Dispositif selon l'une quelconque des revendications 1 à 10, caractérisé en ce que l'appareil (2) est une carte à microcircuits, l'un de ces microcircuits étant an constitué par une ou plusieurs mémoires volatiles.

12. Dispositif selon la revendication 11, caractérisé en ce qu'au moins l'une des mémoires volatiles de l'appareil constitue le circuit de mémorisation (11) du deuxième moyen (10).

13. Dispositif selon la revendication 11, caractérisé en ce que la pile ou la batterie (3) est portée par la carte.

## Patentansprüche

1. Sicherheitsvorrichtung (1), die die Ausführung mindestens einer Funktion einer elektronischen Einheit (2) nach einer ersten Unterbrechung ihrer elektrischen Versorgung selbst, falls sie wieder unter Versorgungsspannung gesetzt wird, verhindert, dadurch gekennzeichnet, daß sie enthält:

eine erste Einrichtung (8), die nur ein einziges Mal im Laufe einer Zeitspanne funktioniert, die an dem Zeitpunkt (T$_0$) eines ersten Unter-Spannung-Setzens durch die Versorgung (3) beginnt, und vor dem Zeitpunkt (T$_2$) einer ersten Unterbrechung dieser Versorgung endet, wobei diese erste Einrichtung an einen Ausgang (9) im Laufe dieser Zeitspanne ein Signal liefert, das für das Funktionieren dieser ersten Einrichtung kennzeichnend ist;

eine zweite Einrichtung (10), deren einer Eingang mit dem Ausgang der ersten Einrichtung (8) verbunden ist, um das kennzeichnende Signal vom Zeitpunkt (T$_0$) des ersten Unter-Spannung-Setzens bis zum Zeitpunkt (T$_2$) einer ersten Unterbrechung zu speichern, wobei diese zweite Einrichtung (10) durch einen Ausgang (17) mit der elektronischen Einheit (2) verbunden ist und an diesem Ausgang ein Verhinderungssignal liefert, das ein erstes Niveau hat, das das Funktionieren der genannten Einheit vom Zeitpunkt (T$_0$) des ersten Unter-Spannung-Setzens bis zum Zeitpunkt (T$_2$) der ersten Unterbrechung zuläßt, wobei dieses Verhinderungssignal ein zweites Niveau hat, das die Ausführung der genannten Funktion, ausgehend vom Zeitpunkt (T$_2$) der ersten Unterbrechung, verhindert und wobei dieses Verhinderungssignal dieses zweite Niveau aufrechterhält, selbst im Falle eines Wieder-Unter-Spannung-Setzens.

2. Vorrichtung nach Anspruch 1, dadurch gekennzeichnet, daß die erste Einrichtung (8) ein Schaltkreis mit Statikbauteilen ist, wobei einer dieser Bauteile am Ende der genannten Zeitspanne durch interne oder externe Einrichtungen in diesem Kreis zerstört wird.

3. Vorrichtung nach Anspruch 1, dadurch gekennzeichnet, daß die zweite Einrichtung (10) einen Speicherkreis (11) für das genannte, kennzeichnende Signal, der mit der ersten Einrichtung (8) verbunden ist, und einen Verhinderungsschaltkreis (12) aufweist, der mit dem Speicherkreis (11) und der ersten Einrichtung (8) verbunden ist und das genannte Verhinderungssignal über einen Ausgang (17) liefert.

4. Vorrichtung nach Anspruch 2, dadurch gekennzeichnet, daß sie außerdem eine Einrichtung (14) zur Freigabe der Verhinderung der Ausführung der genannten Funktion enthält, wobei diese Einrichtung zur Freigabe einen Ausgang (15) hat, der mit dem Eingang der zweiten Einrichtung (10) verbunden ist, diese Einrichtung der Freigabe ein Ausgangssignal liefert, das das genannte erste Niveau darstellt, wenn es nach einem Wieder-Unter-Spannung-Setzen des Apparates nach einer Unterbrechung wünschenswert ist, die Ausführung der genannten Funktion wieder zu erlauben, und wobei diese Einrichtung der Freigabe mindestens einen Eingang (16) enthält, um ein verschlüsseltes Signal zu empfangen, bei dessen Empfang das Ausgangssignal dieser Freigabeeinrichtung das genannte erste Niveau aufweist.

5. Vorrichtung nach Anspruch 3, dadurch gekennzeichnet, daß der Speicherschaltkreis (11) einen oder mehrere energieabhängige Speicher enthält.

6. Vorrichtung nach Anspruch 3, dadurch gekennzeichnet, daß der Speicherschaltkreis (11) einen oder mehrere energieabhängige Speicher enthält.

7. Vorrichtung nach Anspruch 2, dadurch gekennzeichnet, daß der 8auteil, der am Ende der genannten Zeitspanne zerstört wird, ein Bauteil ist, der durch Laserstrahlung zerstört wird.

8. Vorrichtung nach Anspruch 2, dadurch gekennzeichnet, daß der Bauteil, der am Ende der genannten Zeitspanne zerstört wird, ein 8auteil ist, der durch Überstrom, der ihn durchläuft, zerstört wird.

9. Vorrichtung nach Anspruch 2, dadurch gekennzeichnet, daß der Bauteil, der am Ende der genannten Zeitspanne zerstört wird, ein Bauteil ist, der durch mechanische Einwirkung zerstört wird.

10. Vorrichtung nach Anspruch 1, dadurch gekennzeichnet, daß die Versorgung des Apparates (2) und der Vorrichtung eine Zelle oder Batterie ist.

11. Vorrichtung nach einem der Ansprüche 1 bis 10, dadurch gekennzeichnet, daß der Apparat (2) eine gedruckte Schaltung mit Mikroschaltkreisen ist, wobei einer dieser Mikroschaltkreise durch einen oder mehrere energieabhängige Speicher gebidlet wird.

12. Vorrichtung nach Anspruch 11, dadurch gekennzeichnet, daß mindestens einer der energieabhängigen Speicher des Apparates den Speicherschaltkreis (11) der zweiten Einrichtung (10) bildet.

13. Vorrichtung nach Anspruch 11, dadurch gekennzeichnet, daß die Zelle oder die Batterie (3) durch die gedruckte Schaltung getragen wird.

## Claims

1. A security device (1) barring the execution of at least one function of an electronic assembly (2) after a first interruption of its electrical supply even in the case in which the supply voltage is restored, characterized in that it comprises:

a first means (8) operating once only during a period beginning at the instant $(T_0)$ of a first application of voltage by the supply (3), and terminating before the instant $(T_2)$ of a first interruption of this supply, this first means supplying at an output (9) during this period a signal characteristic of the operation of this first means;

a second means (10) one input of which is connected to the output of the first means (8) for storing the characteristic signal from the instant $(T_0)$ of the first application of voltage until the instant $(T_2)$ of a first interruption, this second means (10) being connected by an output (17) to the electronic assembly (2) and supplying at this output, an inhibiting signal having a first level authorising the operation of said assembly, from the instant $(T_0)$ of the first application of voltage, until the instant $(T_2)$ of the first interruption, this inhibiting signal having a second level barring the execution of said function from the instant $(T_2)$ of the first interruption, this inhibiting signal keeping this second level even in the case of restoration of the voltage.

2. A device according to claim 1, characterized in that the first means (8) is a circuit comprising static components, one of these components being destroyed at the end of said period, by means internal or external to this circuit.

3. A device according to claim 1, characterized in that the second means (10) comprises a circuit (11) for storage of said characteristic signal, connected to the first means (8) and an inhibiting circuit (12) connected to the storage circuit (11) and to the first means (8) and supplying said inhibiting signal at an output (17).

4. A device according to claim 2, characterized in that it also comprises a means (14) of releasing the bar to execution of said function, this releasing means having an output (15) connected to the input of the second means (10), this releasing means supplying an output signal presenting said first level when, after a restoration of the voltage to the apparatus after an interruption, it is desirable to permit the execution of said function, this releasing means comprising at least one input (16) for receiving a coded signal, at the reception of which the output signal of this releasing means presents said first level.

5. A device according to claim 3, characterized in that the storage circuit (11) is a relaxation oscillator of the master-slave type.

6. A device according to claim 3, characterized in that the storage circuit (11) comprises one or more transient memories.

7. A device according to claim 2, characterized in that the component destroyed at the end of said period is a component destroyed by a laser beam.

8. A device according to claim 2, characterized in that the component destroyed at the end of said period is a component destroyed by a surge of the current which passes through it.

9. A device according to claim 2, characterized in that the component destroyed at the end of said period is a component destroyed by mechanical action.

10. A device according to claim 1, characterized in that the supply (3) for the apparatus (2) and for the device is a cell or a battery.

11. A device according to any one of claims 1 to 10, characterized in that the apparatus (2) is a card comprising microcircuits, one of these microcircuits being formed by one or more transient memories.

12. A device according to claim 11, characterized in that at least one of the transient memories of the apparatus forms the storage circuit (11) of the second means (10).

13. A device according to claim 11, characterized in that the cell or battery (3) is carried by the card.

FIG.1

FIG.2